# EUROPEAN PATENT SPECIFICATION

(11) **EP 2 387 275 B1**
(45) Date of publication and mention of the grant of the patent: **02.11.2016**
(21) Application number: 10729112.2
(22) Date of filing: 11.01.2010
(51) Int. Cl.: H04W 48/00

(54) **ACCESS CONTROL METHOD, DEVICE, AND SYSTEM FOR ACCESS POINT CELLS**
ZUGANGSKONTROLLVERFAHREN, VORRICHTUNG UND SYSTEM FÜR ZUGANGSPUNKTZELLEN
PROCÉDÉ, DISPOSITIF ET SYSTÈME DE CONTRÔLE D'ACCÈS POUR CELLULES DE POINT D'ACCÈS

(30) Priority: 12.01.2009 CN 200910001542
(43) Date of publication of application: 16.11.2011
(73) Proprietor: Huawei Technologies Co., Ltd., Longgang District Shenzhen, Guangdong 518129 (CN)
(72) Inventor: CHEN, Xin, Guangdong 518129 (CN)
(74) Representative: Pfenning, Meinig & Partner mbB
(86) International application number: PCT/CN2010/070122
(87) International publication number: WO 2010/078853

(56) References cited:
- WO-A1-2007/040449
- WO-A2-2008/009016
- CN-A- 1 949 923
- CN-A- 101 043 755
- CN-A- 101 277 469
- CN-A- 101 466 128
- US-A1- 2007 097 938

## Description

This application claims priority to Chinese Patent Application No. 200910001542.X, filed with the Chinese Patent Office on January 12, 2009 and entitled "METHOD, DEVICE, AND SYSTEM FOR CONTROLLING ACCESS TO ACCESS POINT CELL".

### FIELD OF THE INVENTION

The present invention relates to the mobile communications field, and in particular, to a method, a device, and a system for controlling access to an access point (AP) cell.

### BACKGROUND OF THE INVENTION

Earlier 3^{rd} generation (3G) network construction focuses on outdoor coverage. As a result, the indoor communication requirements of users cannot be well satisfied.

To meet the indoor coverage requirement, a Femtocell is proposed.

The Femtocell is a mini low-power cellular base station (BS), and is also known as an AP. The Femtocell is mainly applied to indoor sites such as homes and offices. The AP may be classified into home BS and office BS. The AP is used as a supplement to the cellular network and provides users with voice and data services.

The AP, as a solution to the convergence of fixed networks and mobile networks and an efficient indoor coverage solution, is highly valued by mobile operators since it is launched. By using the AP, mobile operators can enter markets such as homes and office sites that are formerly occupied by fixed networks and wireless fidelity (Wi-Fi) networks. In addition, because the AP uses a fixed broadband network as its backhaul network, not requiring site
an international mobile subscriber identity (IMSI) of the UE; if the UE does not have rights to access the AP cell, the AP cell sends a rejection message that carries a rejection cause to the UE; after receiving the rejection cause, the UE performs subsequent processing according to a protocol. In this way, the UE may be controlled not to reselect cells that reject the access of the UE.

Because UEs may vary in terms of product design and production standards, some UEs may be incompatible with the rejection cause value. Therefore, problems occur in the network selection performed by the UEs.

WO 2007040449 A1 discloses methods and apparatus provide access control to a femto radio base station of a radio access network. An aspect of the technology concerns a radio access network comprising at last one femto cell, the femto radio base station serving a femto cell of the radio access network, at least one radio network controller node and an access control database. The access control database is configured for facilitating a determination whether a candidate user equipment unit attempting to use the femto radio base station for access to the radio access network is to be given access. The access control database can be situated as a stand alone node of the radio access network or situated at a radio network controller node of the radio access network. In some implementations, if the candidate user equipment unit is not an allowed user equipment unit as determined by the database, the candidate user equipment unit is redirected to another frequency, or to another cell, or to another radio access technology network.

### SUMMARY OF THE INVENTION

Embodiments of the present invention provide a method, a device, and a system for controlling access to an AP cell to avoid a network selection problem that occurs because the UE is incompatible with a rejection cause value.

• An aspect of the present invention discloses an AP cell access control method. The method includes: after receiving a Location Update Request from a UE, allowing, by an access point, AP, the UE to camp in the AP cell; when receiving a service request from the UE, judging, by the AP, whether the UE has the rights to use the AP; and if a judgment result of the judging is negative, retrying the UE to another cell;
wherein the retrying step further comprises:
sending, by the AP, a radio bearer, RB, reconfiguration request to the UE, wherein the RB reconfiguration request carries a frequency and scramble information of a target cell;
after receiving the RB reconfiguration request, retrying, by the UE, to the target cell according to the frequency and scramble information of the target cell carried, in the RB reconfiguration request, and
sending, by the UE, an RB reconfiguration complete message to the AP.

By using the preceding method, the UE can retry another cell through the AP successfully, avoiding a network selection problem because the UE is incompatible with a rejection cause value.

Another aspect of the present invention discloses an AP device. The AP device includes: a camping processing unit, configured to allow a UE to camp in an AP cell after receiving a Location Update Request from the UE; a judging unit, configured to judge whether the UE has the rights to use the AP device when receiving a service request from the UE; and a retrying unit, configured to retry the UE to another cell when the judging unit judges that the UE does not have the rights to use the AP device;
wherein the retrying unit is further configured to send a radio bearer, RB, reconfiguration request to the UE, wherein the RB reconfiguration request carries a frequency and scramble information of a target cell; and
after the UE retrying to the target cell according to the frequency and scramble information of the target cell carried in the RB reconfiguration request, receive an RB reconfiguration complete message sent from the UE.

By using the technical solution of the AP device, the UE can reselect another cell through the AP device, avoiding a network selection problem that occurs because the UE is incompatible with a rejection cause value.

By using the technical solution of the access control system, the UE can retry another cell successfully through the AP device, avoiding a network selection problem that occurs because the UE is incompatible with a rejection cause value.

### BRIEF DESCRIPTION OF THE DRAWINGS

FIG. 1 is a flow chart of a home BS cell access control method according to Embodiment 1 of the present invention;
FIG. 2A is a flow chart of a home BS cell access control method according to Embodiment 2 of the present invention;

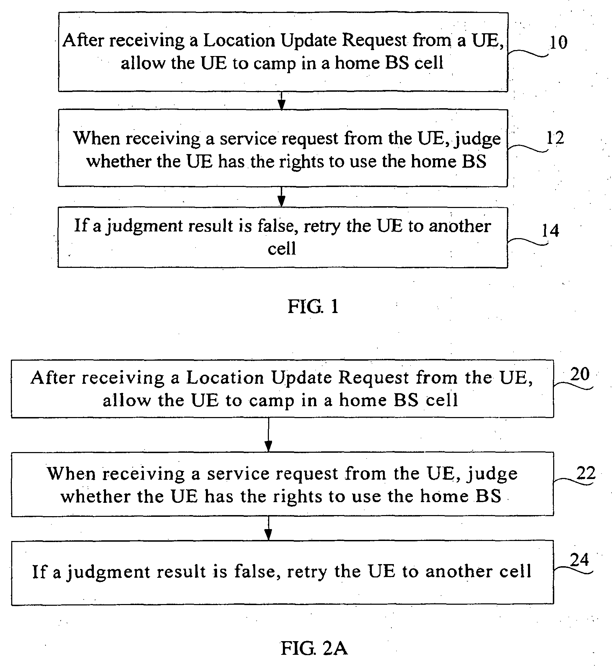

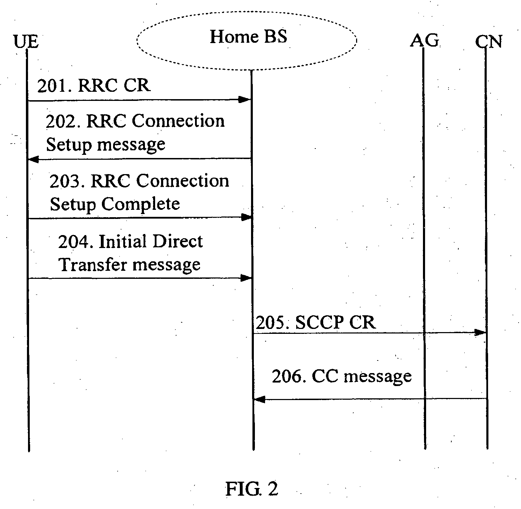

FIG. 2 is a signaling flow chart of a UE camping in a home BS cell in the home BS cell access control method according to Embodiment 2 of the present invention;

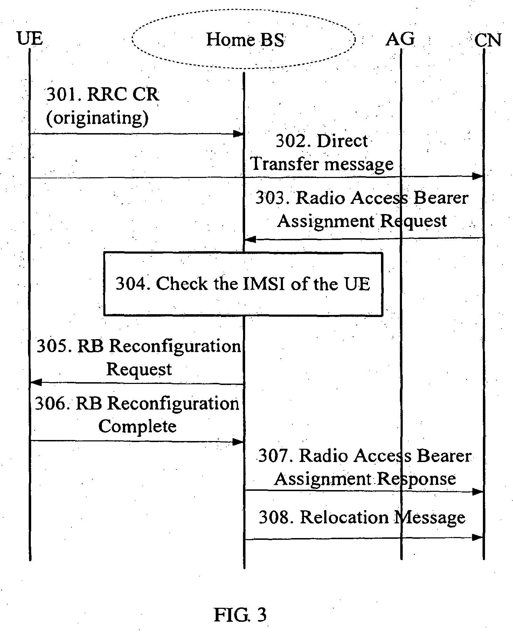

FIG. 3 is a signaling flow chart when the UE as a calling party in the home BS cell access control method according to Embodiment 2 of the present invention;

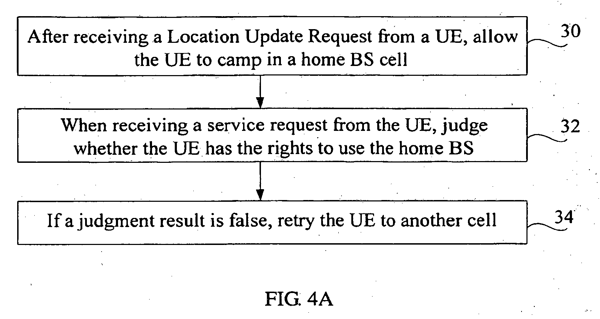

FIG. 4A is a flow chart of a home BS cell access control method according to Embodiment 3 of the present invention;

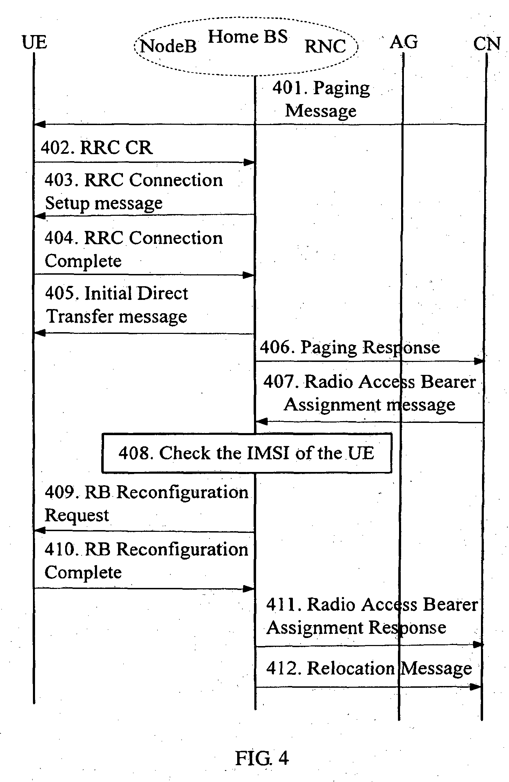

FIG. 4 is a signaling flow chart when the UE as a called party in the home BS cell access control method according to Embodiment 3 of the present invention;

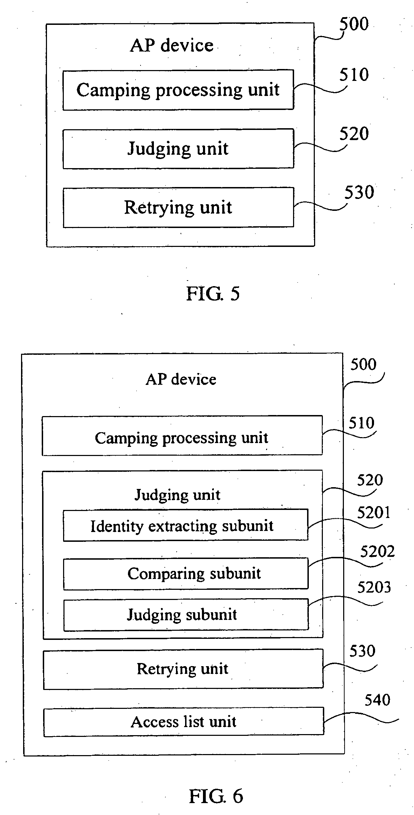

FIG. 5 is a schematic structural diagram of a home BS cell according to Embodiment 4 of the present invention;
FIG. 6 is a schematic structural diagram of a home BS cell according to Embodiment 5 of the present invention; and

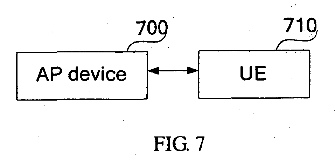

FIG. 7 is a schematic structural diagram of an access control system according to Embodiment 6 of the present invention.

### DETAILED DESCRIPTION OF THE EMBODIMENTS

Embodiments of the present invention provide an AP cell access control method, an AP device, and an access control system so that an AP can retry a UE from an AP cell where the UE camps to another cell. The following describes the embodiments of the present invention in detail with reference to the accompanying drawings.

The technical solution provided in the embodiments of the present invention can be applied in various communication systems, for example, the Global System for Mobile communications (GSM), Code Division Multiple Access (CDMA) system, Wideband Code Division Multiple Access (WCDMA) system, General Packet Radio Service (GPRS) system, and Long Term Evolution (LTE) system. A mobile terminal, also known as a UE, can communicate with one or multiple core networks (CNs) through a radio access network (RAN). The mobile terminal may be a mobile station, for example, a mobile phone (or cellular phone), and a computer with a mobile terminal, such as a portable mobile device, mini mobile device, handheld mobile device, and mobile device built in a computer or vehicle-mounted mobile device. The mobile devices exchange language and/or data with the RAN.
selection and judgment process is required to judge whether a UE has the rights to access the home BS. All UEs are allowed to access the home BS in open mode, and therefore, the access judgment process is not required in this mode. Certainly, the home BS may also work in other modes such as a half-closed mode.

In the prior art, because UEs may vary in terms of product design and production standards, some UEs may be incompatible with a rejection cause value. Therefore, a problem occurs in the network selection performed by the UEs. For example, after some UEs receive the rejection cause value carried in a rejection message, the UEs may work according to the actions on the cause value defined in the protocol and do not reselect cells that reject the access of the UEs. However, after other UEs receive the rejection cause value, those UEs do not work according to the actions on the cause value defined in the protocol but still reselect cells (perform cell reselection) that reject the access of the UEs. Therefore, a problem occurs in the network selection performed by those UEs, for example, the UEs continuously reselect the cells that reject the access of the UEs.

To solve the above problem, multiple embodiments are provided in the present invention.

### Embodiment 1

FlG. 1 is a flow chart of a home BS cell access control method according to Embodiment 1 of the present invention. The method includes the following steps:
Step 10: After receiving a Location Update Request from a UE, allow the UE to camp in a home BS cell.
Step 12: When receiving a service request from the UE, judge whether the UE has the rights to use the home BS cell.
Step 14: If a judgment result is negative, retry the UE to another cell.

By using the home BS cell access control method, after receiving a Location Update Request from the UE, the home BS allows the UE to camp in the home BS; when receiving a service request from the UE, the home BS judges whether the UE has the rights to use the home BS; if the UE does not have the rights to use the home BS, the home BS retries the UE to another cell. In this way, the home BS can retry the UE to another cell successfully, avoiding a network selection problem that occurs because the UE is incompatible with a rejection cause value.

### Embodiment 2

This embodiment describes the home BS cell access control method based on a process in which a UE camps in a home BS cell and the UE initiates a calling party service request.

FIG. 2A is a flow chart of a home BS cell access control method according to Embodiment 2 of the present invention. The method includes the following steps:
Step 20: After receiving a Location Update Request from a UE, allow the UE to camp in a home BS cell.

For example, the UE is powered on or enters the coverage area of the home BS (for example, the UE in the idle state moves to the AP). As shown in FIG. 2, the standard process of camping in the home BS cell by the UE may include the following steps:
Step 201: The UE initiates a Radio Resource Control (RRC) Connection Request (CR) to the home BS.

The RRC CR carries a camping cause value.

Step 202: The home BS sends an RRC Connection Setup message to the UE.

Step 203: The UE sends an RRC Connection Setup Complete message to the home BS.

Step 204: The UE sends an Initial Direct Transfer message to the home BS, where the Initial Direct Transfer message carries non-access stratum (NAS) information that the UE sends to a CN, where the NAS information includes a Location Update Request.

Step 205: The home BS sends a Signaling Connection Control Part of SS7 (SCCP) CR to the CN through an access gateway (AG) via the Iu interface.

Step 206: The CN sends a Connection Confirm (CC) message to the home BS through the AG. The home BS receives the CC, and confirms that the signaling connection is established successfully. Now, the UE camps in the home BS cell successfully.

Step 22: When receiving a service request from the UE, judge whether the UE has the rights to use the home BS.

For example, when the service request is a calling party service request, the step of judging whether the UE has the rights to use the home BS includes: judging whether the UE has the rights to use the home BS according to the calling party service request of the UE.

Further, the step of judging whether the UE has the rights to use the home BS according to the calling party service request of the UE includes: obtaining an identity of the UE according to the calling party service request of the UE; comparing the identity of the UE with each UE identity in an admission list that is set up in the home BS beforehand; if the identity of the UE is not in the admission list, determining that the UE does not have the rights to use the home BS.

For example, the UE that camps in the home BS cell successfully sends a service request to the home BS; the home BS judges whether the UE has the rights to use the home BS, according to the service request of the UE. As shown in FIG. 3, the specific process includes the following steps:
Step 301: The UE sends an RRC CR to the home BS.

For example, the RRC CR carries a calling party service cause value; the home BS determines that the RRC CR is a service connection request according to the calling party service cause value. The details of a messaging unit are provided in the protocol.

Step 302: The home BS sends a service connection request to the CN.

For example, the home BS transfers a Direct Transfer message sent from the UE to the CN.

Step 303: After receiving the service connection request from the home BS, the CN sends a Radio Access Bearer Assignment Request to the home BS.

It is understandable that the process after the UE initiates a calling party service request and before the CN sends a Radio Access Bearer Assignment Request to the home BS is the same as the normal connection process.

Step 304: The home BS checks an IMSI of the UE according to the calling party service request of the UE, and judges whether the UE has the rights to use the home BS. The specific process may include the following steps:
(1) Obtain the IMSI of the UE according to the calling party service request of the UE.
   For example, the home BS parses the RRC CR, and obtains the IMSI of the UE from an initial UE identity cell in the RRC CR.
(2) Compare the IMSI of the UE with each IMSI in the admission list that is set up in the home BS beforehand.
(3) If the IMSI of the UE is in the admission list, determine that the UE has the rights to use the home BS; if the IMSI of the UE is not in the admission list, determine that the UE does not have the rights to use the home BS.

In the admission list of the home BS, IMSIs of UEs that can use the home BS are listed.

In addition, the admission list may be set up by local access writing or through an operation and maintenance system.

Step 24: If a judgment result is negative, retry the UE to another cell.

For example, if the judgment result is negative, that is, if the UE does not have the rights to use the home BS, the home BS retries the UE to another cell. This embodiment is described based on an example that the UE is retried to a macro cell, but the present invention is not limited to such example.

The home BS already detects the macro cell when being powered on, and already knows frequency and scramble information of the macro cell. Therefore, the radio bearer (RB) reconfiguration may be used to retry the UE to the macro cell.

As shown in FIG. 3, step 24 may include the following steps:
Step 305: The home BS sends an RB Reconfiguration Request to the UE.

For example, the RB Reconfiguration Request carries the frequency and scramble information of a target cell.

Step 306: After receiving the RB Reconfiguration Request, the UE retries to the macro cell according to the frequency and scramble information of the macro cell carried in the RB Reconfiguration Request, and sends an RB Reconfiguration Complete message to the home BS.

By using this method, the UE that does not have the rights to access the home BS can be retried to another cell.

After the UE is retried to the macro cell, this embodiment may further include the following steps:
Step 307: The home BS sends a Radio Access Bearer Assignment Response that carries a direct retry cause value to the CN.
Step 308: The home BS sends a relocation message to the CN to start a relocation process.

In this embodiment, if the UE has the rights to use the home BS, the home BS performs processing according to a normal connection process.

### Embodiment 3

This embodiment describes the home BS access control method based on a process in which a UE camps in the home BS cell and the UE is a called party.

FIG. 4A is a flow chart of a home BS access control method according to Embodiment 3 of the present invention. The method includes the following steps:
Step 30: After receiving a Location Update Request from a UE, allow the UE to camp in a home BS cell.

The specific process is already described in Embodiment 2.

Step 32: When receiving a service request from the UE, judge whether the UE has the rights to use the home BS.

In this embodiment, the service request is a called party service request, and the step of judging whether the UE has the rights to use the home BS includes: judging whether the UE has the rights to use the home BS according to the called party service request of the UE.

Further, the step of judging whether the UE has the rights to use the home BS according to the called party service request of the UE includes: obtaining an identity of the UE according to the called party service request of the UE; comparing the identity of the UE with each UE identity in the admission list that is set up in the home BS beforehand; if the identity of the UE is not in the admission list, determining that the UE does not have the rights to use the home BS.

Specifically, when the UE camping in the home BS cell is a called party, the home BS judges whether the UE has the rights to use the home BS according to the called party service request of the UE. As shown in FIG. 4, the specific process includes the following steps:
Step 401: The CN pages the UE through the AG.
Step 402: The UE sends an RRC CR to the home BS.

For example, the RRC CR carries a terminating cause value; the home BS determines that the RRC CR is a service connection request according to the terminating cause value.

Step 403: The home BS sends an RRC Connection Setup message to the UE.

Step 404: The UE sends an RRC Connection Complete message to the home BS.

Step 405: The UE sends an Initial Direct Transfer message to the home BS.

Step 406: The home BS sends a paging response to the CN.

Step 407: The CN sends a Radio Access Bearer Assignment Request to the home BS.

Step 408: The home BS checks the IMSI of the UE, and judges whether the UE has the rights to use the home BS. The specific process may include the following steps:
(1) Obtain the IMSI of the UE according to the called party service request of the UE.
   The home BS obtains the IMSI of the UE from the RRC CR that the UE sends to the home BS.
(2) Compare the IMSI of the UE with each IMSI in the admission list that is set up in the home BS beforehand.
(3) If the IMSI of the UE is in the admission list, determine that the UE has the rights to use the home BS; if the UE is not in the admission list, determine that the UE does not have the rights to use the home BS.

Step 34: If a judgment result is negative, the home BS retries the UE to another cell.

If the judgment result is negative, that is, if the UE does not have the rights to use the home BS, the home BS retries the UE to another cell. As shown in FIG. 4, the process may include the following steps:
Step 409: The home BS sends an RB Reconfiguration Request to the UE.

Step 410: After receiving the RB Reconfiguration Request, the UE retries to another cell according to the RB Reconfiguration Request, and sends an RB Reconfiguration Complete message to the home BS.

For example, after the UE retry to another cell, this embodiment may further include the following steps:
Step 411: The home BS sends a Radio Access Bearer Assignment Response that carries a direct retry cause value to the CN.

Step 412: The home BS sends a relocation message to the CN to start a relocation process.

In this embodiment, if the UE has the rights to use the home BS, the home BS performs processing according to a normal connection process.

### Embodiment 4

FIG. 5 illustrates an AP device 500 according to Embodiment 4 of the present invention. The AP device 500 includes:
a camping processing unit 510, configured to allow a UE to camp in an AP cell after receiving a Location Update Request from the UE;
a judging unit 520, configured to judge whether the UE has the rights to use the AP when receiving a service request from the UE; and
a retrying unit 530, configured to retry the UE to another cell when a judgment result of the judging unit is negative.

By using the AP device provided in this embodiment, after receiving the Location Update Request from the UE, the camping processing unit 510 allows the UE to camp in the AP cell; the judging unit 520 judges whether the UE has the rights to use the AP device when receiving the service request from the UE; when the judgment result of the judging unit is negative, the retrying unit retries the UE to another cell. In this way, the AP device can retry the UE to another cell, avoiding a network selection problem that occurs because the UE is incompatible with a rejection cause value.

### Embodiment 5

As shown in FIG. 6, to facilitate the judging unit 520 to judge whether the UE has the rights to use the AP device, the AP device 500 on the basis of the previous embodiment may further include an admission list unit 540 configured to store identities of UEs that have the rights to use the AP device.

Further, the judging unit 520 may include:
an identity extracting subunit 5201, configured to extract the identity of the UE from the service request of the UE;
a comparing subunit 5202, configured to compare the identity of the UE extracted by the identity extracting subunit with the identity of each UE stored in the admission list unit; and
a judging subunit 5203, configured to judge whether the UE has the rights to use the AP device according to a comparison result of the comparing subunit.

It is understandable that the service request of the UE may be a calling party service request when the UE is a calling party or a called party service request when the UE is a called party.

The AP device provided in the embodiments of the present invention may be a home BS and/or an office BS.

### Embodiment 6

This embodiment provides an access control system. As shown in FIG. 7, the access control system includes an AP device 700 and a UE 710 that communicates with the AP device. The AP device 700 has the same structure and function as the AP device provided in the previous two embodiments of the present invention, and is not described again herein.

By using the access control system provided in this embodiment, after receiving the Location Update Request from the UE, the camping processing unit of the AP device allows the UE to camp in the AP cell; the judging unit judges whether the UE has the rights to use the AP when receiving the service request from the UE; when the judgment result of the judging unit is negative, the retrying unit retries the UE to another cell. In this way, the AP can retry the UE to another cell, avoiding a network selection problem that occurs because the UE is incompatible with a rejection cause value.

According to the technical solution provided in the embodiments of the present invention, at the camping stage of the UE, the AP allows the camping of all the UEs so long as the UEs initiate a request. When a UE needs to use a service, the AP analyzes the identity of the UE, and judges whether the UE has the rights to use the AP. For a UE that has the rights to use the AP, the AP performs processing according to the normal connection process. For a UE that does not have the rights to use the home BS, the AP retries the UE to another cell. In this way, the AP can retry the UE to another cell, avoiding a network selection problem because the UE is incompatible with a rejection cause value.

It is understandable to those skilled in the art that for the specific working processes of the preceding system, device, modules, and units, corresponding processes provided in the method of the present invention can be referred to and are not described again.

In addition, the sequence numbers of embodiments of the present invention are intended for description purposes and do not represent the order of preference.

Based on the preceding description of the embodiments, it is understandable to those skilled in the art that the present invention may be implemented through software in addition to a necessary universal hardware platform or through hardware only. In most circumstances, the former is preferred. Based on this understanding, the essence of the technical solution of the present invention or the contributions to the prior art may be embodied as a software product. The software product is stored in a storage medium, and includes several instructions that enable a computer device (for example, a personal computer, a server or a network device) to perform all or part of the steps of the methods provided in the embodiments of the present invention. The preceding storage medium includes various media that can store program codes, such as a universal serial bus (USB) disk, a mobile hard disk, a read-only memory (ROM), a random access memory (RAM), a magnetic disk, or a compact disk-read only memory (CD-ROM).

In the embodiments of the present invention, the disclosed system, device and method may be implemented in other modes without departing from the scope of the present invention. For example, the above device is illustrative only. For example, the division of modules or units is based on logical functions only. In the actual implementation, other division modes may be adopted, for example, multiple units or components may be combined or integrated in another system, or some features may be ignored or not be executed. The units that are described as separate parts may be separated physically or not. The parts that are displayed as the units may be physical units or not. That is, the parts may be located at one place or distributed on multiple network elements. Some or all of the modules may be selected according to the actual need to achieve the purpose of the technical solution provided in embodiments of the present invention. Those skilled in the art may understand and implement the technical solution without creative efforts.

In addition, the schematic diagrams illustrating the system, device, method and different embodiments may be combined or integrated with other systems, modules, technologies or methods without departing from the scope of the present invention. In addition, the displayed or discussed mutual couplings or direct couplings or communication connections are implemented through some interfaces. The indirect couplings or communication connections between the devices or units may be implemented in electronic, mechanical or other forms.

## Claims

1. A method for controlling access to an access point, AP, cell, comprising:
after receiving a Location Update Request from a user equipment, UE, allowing, by an access point, AP, the UE to camp in the AP cell;
when receiving a service request from the UE, judging, by the AP, whether the UE has rights to use the AP; and
if a judgment result of the judging is negative, retrying the UE to another cell;
wherein the retrying step further comprises:
sending, by the AP, a radio bearer, RB, reconfiguration request to the UE, wherein the RB reconfiguration request carries a frequency and scramble information of a target cell;
after receiving the RB reconfiguration request, retrying, by the UE, to the target cell according to the frequency and scramble information of the target cell carried in the RB reconfiguration request, and
sending, by the UE, an RB reconfiguration complete message to the AP.

2. The access control method according to claim 1, wherein the service request is a calling party service request and the judging whether the UE has the rights to use the AP comprises:
judging whether the UE has the rights to use the AP according to the calling party service request of the UE.

3. The access control method according to claim 2, wherein the judging whether the UE has the rights to use the AP according to the calling party service request of the UE comprises:
obtaining an identity of the UE according to the calling party service request of the UE;
comparing the identity of the UE with each UE identity in an admission list that is set up in the AP beforehand; and
if the UE identity is not in the admission list, determining that the UE does not have the rights to use the AP.

4. The access control method according to claim 1, wherein the service request is a called party service request and the judging whether the UE has the rights to use the AP comprises:
judging whether the UE has the rights to use the AP according to the called party service request of the UE.

5. The access control method according to claim 4, wherein the judging whether the UE has the rights to use the AP according to the called party service request of the UE comprises:
obtaining an identity of the UE according to the called party service request of the UE;
comparing the identity of the UE with each UE identity in the admission list that is set up in the AP beforehand; and
if the UE identity is not in the admission list, determining that the UE does not have the rights to use the AP.

6. The method according to any one of claims 1 to 5, wherein the allowing the UE to camp in the AP cell after receiving the Location Update Request from the UE comprises:
receiving a Radio Resource Control, RRC, Connection Request that carries a camping cause value from the UE;
sending an RRC Connection Setup message to the UE, and receiving an RRC Connection Setup Complete message from the UE;
receiving an Initial Direct Transfer message that carries the Location Update Request from the UE, and sending a Signaling Connection Control Part, SCCP, Connection Request to a core network, CN, through an access gateway, AG; and
receiving a Connection Confirm message that the CN sends through the AG, and confirming that the signaling connection is established successfully.

7. The access control method according to claim 1, wherein the AP is a home base station, BS, or an office BS.

8. An access point, AP, device, comprising:
a camping processing unit, configured to allow a user equipment, UE, to camp in an AP cell after receiving a Location Update Request from the UE;
a judging unit, configured to judge whether the UE has rights to use the AP when receiving a service request from the UE; and
a retrying unit, configured to retry the UE to another cell when a judgment result of the judging unit is negative;
wherein the retrying unit is further configured to send a radio bearer, RB, reconfiguration request to the UE, wherein the RB reconfiguration request carries a frequency and scramble information of a target cell; and
after the UE retrying to the target cell according to the frequency and scramble information of the target cell carried in the RB reconfiguration request, receive an RB reconfiguration complete message sent from the UE.

9. The AP device according to claim 8, further comprising an admission list unit, configured to store identities of UEs that have the rights to use the AP, wherein:
the judging unit comprises:
an identity extracting subunit, configured to extract the identity of the UE from the service request of the UE;
a comparing subunit, configured to compare the identity of the UE extracted by the identity extracting subunit with each UE identity stored in the admission list unit; and
a judging subunit, configured to judge whether the UE has the rights to use the AP according to a comparison result of the comparing subunit.

10. The AP device according to claim 8 or claim 9, wherein the camping processing unit allows the UE to camp in the AP cell after receiving the Location Update Request from the UE in the following way:
receiving a Radio Resource Control, RRC, Connection Request that carries a camping cause value from the UE;
sending an RRC Connection Setup message to the UE, and receiving an RRC Connection Setup Complete message from the UE;
receiving an Initial Direct Transfer message that carries the Location Update Request from the UE, and sending a Signaling Connection Control Part, SCCP, Connection Request to a core network, CN, through an access gateway, AG; and
receiving a Connection Confirm message that the CN sends through the AG, and confirming that the signaling connection is established successfully.

11. The AP device according to any one of claims 9 to 11, wherein the service request is a calling party service request and the judging unit judges whether the UE has the rights to use the AP in the following way:
obtaining an identity of the UE according to the calling party service request of the UE;
comparing the identity of the UE with each UE identity in an admission list that is set up in the AP beforehand; and
if the UE identity is not in the admission list, determining that the UE does not have the rights to use the AP.

12. The AP device according to any one of claims 8 to 10, wherein the service request is a called party service request and the judging unit judges whether the UE has the rights to use the AP in the following way:
obtaining an identity of the UE according to the called party service request of the UE;
comparing the identity of the UE with each UE identity in the admission list that is set up in the AP beforehand; and
if the UE identity is not in the admission list, determining that the UE does not have the rights to use the AP.

13. The AP device according to any one of claims 8 to 12, wherein the retrying unit retries the UE to another cell in the following way:
sending a Radio Bearer, RB, Reconfiguration Request to the UE, and retrying the UE to another cell.

14. An access control system, comprising the AP device according to any one of claims 8 to 13.

## Patentansprüche

1. Verfahren zur Kontrolle des Zugangs zu einer Zugangspunktzelle (Access Point Cell; AP-Zelle), das umfasst:
nach einem Empfangen einer Location-Update-Anfrage aus einem mobilen Endgerät (User Equipment; UE), es dem UE durch einen Zugangspunkt, AP, zu gestatten, in der AP-Zelle zu "campen";
bei einem Empfangen einer Dienstanforderung aus dem UE zu beurteilen, durch den AP, ob das UE Rechte besitzt, den AP zu nutzen; und
falls ein Beurteilungsergebnis der Beurteilung negativ ausfällt, den Versuch des UE an eine andere Zelle zu wiederholen;
wobei der Schritt des Wiederholens umfasst:
Senden, durch das AP, einer Radio-Bearer(RB)-Rekonfigurationsaufforderung an das UE, wobei die RB-Rekonfigurationsaufforderung eine Frequenz- und Verwürfelungsinformation einer Zielzelle trägt;
nach Empfangen der RB-Rekonfigurationsaufforderung, Wiederholen des Versuchs, durch das UE, an die Zielzelle gemäß der in der RB-Rekonfigurationsaufforderung getragenen Frequenz- und Verwürfelungsinformation der Zielzelle, und
Senden, durch das UE, einer RB-Rekonfiguration-abgeschlossen-Nachricht an den AP.

2. Zugangskontrollverfahren nach Anspruch 1, wobei die Dienstanforderung eine Anrufender-Teilnehmer-Dienstanforderung ist, und das Beurteilen, ob das UE die Rechte besitzt, den AP zu nutzen, umfasst:
Beurteilen, gemäß der Anrufender-Teilnehmer-Dienstanforderung des UE, ob das UE die Rechte besitzt, den AP zu nutzen.

3. Zugangskontrollverfahren nach Anspruch 2, wobei das Beurteilen, gemäß der Anrufender-Teilnehmer-Dienstanforderung des UE, ob das UE die Rechte besitzt, den AP zu nutzen, umfasst:
Einholen einer Identität des UE gemäß der Anrufender-Teilnehmer-Dienstanforderung des UE;
Vergleichen der Identität des UE mit allen UE-Identitäten in einer zuvor im AP angelegten Zugangsberechtigungsliste; und
falls die UE-Identität nicht in der Zugangsberechtigungsliste steht, Bestimmen, dass das UE nicht die Rechte besitzt, den AP zu nutzen.

4. Zugangskontrollverfahren nach Anspruch 1, wobei die Dienstanforderung eine Angerufener-Teilnehmer-Dienstanforderung ist, und das Beurteilen, ob das UE die Rechte besitzt, den AP zu nutzen, umfasst:
Beurteilen, gemäß der Angerufener-Teilnehmer-Dienstanforderung des UE, ob das UE die Rechte besitzt, den AP zu nutzen.

5. Zugangskontrollverfahren nach Anspruch 4, wobei das Beurteilen, gemäß der Angerufener-Teilnehmer-Dienstanforderung des UE, ob das UE die Rechte besitzt, den AP zu nutzen, umfasst:
Einholen einer Identität des UE gemäß der Angerufener-Teilnehmer-Dienstanforderung des UE;
Vergleichen der Identität des UE mit allen UE-Identitäten in der zuvor im AP angelegten Zugangsberechtigungsliste; und
falls die UE-Identität nicht in der Zugangsberechtigungsliste steht, Bestimmen, dass das UE nicht die Rechte besitzt, den AP zu nutzen.

6. Verfahren nach einem der Ansprüche 1 bis 5, wobei, dem UE zu gestatten, nach dem Empfangen der Location-Update-Anfrage aus dem UE in der AP-Zelle zu "campen", umfasst:
Empfangen einer Funkressourcensteuerungs-Verbindungsanfrage (Radio Resource Control Connection Request; RRC-Verbindungsanfrage), die einen "Camping"-Ursachenwert trägt, aus dem UE;
Senden einer RRC-Verbindungsaufbau-Nachricht an das UE, und Empfangen einer RRC-Verbindungsaufbau-abgeschlossen-Nachricht aus dem UE;
Empfangen einer Anfangsdirektübertragungs-Nachricht, die die Location-Update-Anfrage aus dem UE trägt, und Senden einer Signalisierverbindungssteuerteil-Verbindungsanfrage (Signaling Connection Control Part Connection Request; SCCP-Verbindungsanfrage) an ein Kernnetz (Core Network; CN), durch einen Access Gateway, AG; und
Empfangen einer Verbindungsbestätigungsnachricht, die das CN durch den AG sendet, und Bestätigen, dass die Signalisierungsverbindung erfolgreich aufgebaut ist.

7. Zugangskontrollverfahren nach Anspruch 1, wobei der AP eine private Basisstation, BS, oder eine Büro-BS ist.

8. Access-Point(AP)-Einrichtung, die umfasst:
eine "Camping"-Verarbeitungseinheit, die ausgelegt ist, es einem mobilen Endgerät (User Equipment, UE), nach Empfangen einer Location-Update-Anfrage aus dem UE, zu gestatten, in einer AP-Zelle zu "campen";
eine Beurteilungseinheit, die ausgelegt ist, bei einem Empfangen einer Dienstanforderung aus dem UE zu beurteilen, ob das UE Rechte besitzt, den AP zu nutzen; und
eine Wiederholungseinheit, die ausgelegt ist, den Versuch des UE an eine andere Zelle zu wiederholen, wenn ein Beurteilungsergebnis der Beurteilungseinheit negativ ausfällt;
wobei die Wiederholungseinheit ferner ausgelegt ist, eine Radio-Bearer(RB)-Rekonfigurationsaufforderung an das UE zu senden, wobei die RB-Rekonfigurationsaufforderung eine Frequenz- und Verwürfelungsinformation einer Zielzelle trägt; und
nach dem Wiederholen des Versuchs, durch das UE, an die Zielzelle gemäß der in der RB-Rekonfigurationsaufforderung getragenen Frequenz- und Verwürfelungsinformation der Zielzelle, eine aus dem UE gesendete RB-Rekonfiguration-abgeschlossen-Nachricht zu empfangen.

9. AP-Einrichtung nach Anspruch 8, die ferner eine Zugangsberechtigungslisteneinheit umfasst, die ausgelegt ist, Identitäten von UEs zu speichern, die die Rechte besitzen, den AP zu nutzen, wobei:
die Beurteilungseinheit umfasst:
eine Identitätsextraktions-Subeinheit, die ausgelegt ist, die Identität des UE aus der Dienstanforderung des UE zu extrahieren;
eine Vergleichs-Subeinheit, die ausgelegt ist, die durch die Identitätsextraktions-Subeinheit extrahierte Identität des UE mit allen in der Zugangsberechtigungsliste gespeicherten UE-Identitäten zu vergleichen; und
eine Beurteilungs-Subeinheit, die ausgelegt ist, gemäß einem Vergleichsergebnis der Vergleichs-Subeinheit zu beurteilen, ob das UE die Rechte besitzt, den AP zu nutzen.

10. AP-Einrichtung nach Anspruch 8 oder Anspruch 9, wobei die "Camping"-Verarbeitungseinheit es dem UE, nach Empfangen der Location-Update-Anfrage aus dem UE, gestattet, in der AP-Zelle zu "campen", wie folgt:
Empfangen einer Funkressourcensteuerungs-Verbindungsanfrage (Radio Resource Control Connection Request; RRC-Verbindungsanfrage), die einen "Camping"-Ursachenwert aus dem UE trägt;
Senden einer RRC-Verbindungsaufbau-Nachricht an das UE, und Empfangen einer RRC-Verbindungsaufbau-abgeschlossen-Nachricht aus dem UE;
Empfangen einer Anfangsdirektübertragungs-Nachricht (Inital Direct Transfer message), die die Location-Update-Anfrage aus dem UE trägt, und Senden einer Signalisierverbindungssteuerteil-Verbindungsanfrage (Signaling Connection Control Part Connection Request; SCCP-Verbindungsanfrage) an ein Kernnetz (Core Network; CN), durch einen Access Gateway, AG; und
Empfangen einer Verbindungsbestätigungsnachricht, die das CN durch den AG sendet, und Bestätigen, dass die Signalisierungsverbindung erfolgreich aufgebaut ist.

11. AP-Einrichtung nach einem der Ansprüche 9 bis 11, wobei die Dienstanforderung eine Anrufender-Teilnehmer-Dienstanforderung ist, und die Beurteilungseinheit beurteilt, ob das UE die Rechte besitzt, den AP zu nutzen, wie folgt:
Einholen einer Identität des UE gemäß der Anrufender-Teilnehmer-Dienstanforderung des UE;
Vergleichen der Identität des UE mit allen UE-Identitäten in einer zuvor im AP angelegten Zugangsberechtigungsliste; und
falls die UE-Identität nicht in der Zugangsberechtigungsliste steht, Bestimmen, dass das UE nicht die Rechte besitzt, den AP zu nutzen.

12. AP-Einrichtung nach einem der Ansprüche 8 bis 10, wobei die Dienstanforderung eine Angerufener-Teilnehmer-Dienstanforderung ist, und die Beurteilungseinheit beurteilt, ob das UE die Rechte besitzt, den AP zu nutzen, wie folgt:
Einholen einer Identität des UE gemäß der Angerufener-Teilnehmer-Dienstanforderung des UE;
Vergleichen der Identität des UE mit allen UE-Identitäten in der zuvor im AP angelegten Zugangsberechtigungsliste; und
falls die UE-Identität nicht in der Zugangsberechtigungsliste steht, Bestimmen, dass das UE nicht die Rechte besitzt, den AP zu nutzen.

13. AP-Einrichtung nach einem der Ansprüche 8 bis 12, wobei die Wiederholungseinheit den Versuch des UE an eine andere Zelle wiederholt, wie folgt:
Senden einer Radio-Bearer(RB)-Rekonfigurationsaufforderung an das UE, und Wiederholen des Versuchs des UE an eine andere Zelle.

14. Zugangskontrollsystem, das die AP-Einrichtung nach einem der Ansprüche 8 bis 13 umfasst.

## Revendications

1. Procédé pour contrôler l'accès à une cellule de point d'accès, AP, comprenant :
après avoir reçu une Demande d'Actualisation d'Emplacement de la part d'un équipement d'utilisateur, UE, le fait de permettre, par un point d'accès, AP, à l'UE d'être mis en attente dans la cellule AP ;
lors de la réception d'une demande de service de la part de l'UE, le fait de juger, par l'AP, si l'UE détient des droits requis pour utiliser l'AP ; et
si un résultat du jugement est négatif, le réessayage de l'UE sur une autre cellule ;
dans lequel l'étape de réessayage comprend par ailleurs :
l'envoi, par l'AP, d'une demande de reconfiguration d'une porteuse radioélectrique, RB, à l'UE, dans lequel la demande de reconfiguration RB porte une information de fréquence et de brouillage d'une cellule cible ;
après la réception de la demande de reconfiguration RB, le réessayage, par l'UE, vers la cellule cible en fonction de l'information de fréquence et de brouillage de la cellule cible portée dans la demande de reconfiguration RB, et
l'envoi, par l'UE, d'un message de reconfiguration complète RB vers l'AP.

2. Procédé de contrôle d'accès selon la revendication 1, dans lequel la demande de service est une demande de service de partie appelante, et le fait de juger si l'UE détient les droits requis pour utiliser l'AP comprend :
le fait de juger si l'UE détient les droits requis pour utiliser l'AP selon la demande de service de la partie appelante de l'UE.

3. Procédé de contrôle d'accès selon la revendication 2, dans lequel le fait de juger si l'UE détient les droits requis pour utiliser l'AP d'après la demande de service de la partie appelante de l'UE comprend :
l'obtention d'une identité de l'UE d'après la demande de service de la partie appelante de l'UE ;
la comparaison de l'identité de l'UE à chaque identité d'UE sur une liste d'admission qui est établie à l'avance dans l'AP ; et
si l'identité de l'UE ne figure pas sur la liste d'admission, la détermination de ce que l'UE ne détient pas les droits requis pour utiliser l'AP.

4. Procédé de contrôle d'accès selon la revendication 1, dans lequel la demande de service est une demande de service de partie appelée, et le fait de juger si l'UE détient les droits requis pour utiliser l'AP comprend :
le fait de juger si l'UE détient les droits requis pour utiliser l'AP d'après la demande de service de la partie appelée de l'UE.

5. Procédé de contrôle d'accès selon la revendication 4, dans lequel le fait de juger si l'UE détient les droits requis pour utiliser l'AP d'après la demande de service de la partie appelée de l'UE comprend :
l'obtention d'une identité de l'UE d'après la demande de service de partie appelée de l'UE ;
la comparaison de l'identité de l'UE à chaque identité d'UE figurant sur la liste d'admission qui est établie à l'avance dans l'AP ; et
si l'identité de l'UE ne figure pas sur la liste d'admission, la détermination de ce que l'UE ne détient pas les droits requis pour utiliser l'AP.

6. Procédé selon l'une quelconque des revendications 1 à 5, dans lequel le fait de permettre à l'UE d'être mis en attente dans la cellule AP après avoir reçu la Demande d'Actualisation d'Emplacement de la part de l'UE comprend :
la réception d'une Demande de Connexion de Contrôle des Ressources Radio, RRC, qui porte une valeur de cause de mise en attente de la part de l'UE ;
l'émission d'un message de Configuration de Connexion RRC vers l'UE, et la réception d'un message de Configuration de Connexion Complète RRC de la part de l'UE ;
la réception d'un message de Transfert Direct Initial qui porte la Demande d'Actualisation d'Emplacement de la part de l'UE, et l'envoi d'une Demande de Connexion de Partie de Contrôle de Connexion de Signalisation, SCCP, vers un réseau central, CN, par le biais d'une passerelle d'accès, AG ; et
la réception d'un message de Confirmation de Connexion que le CN émet par le biais de l'AG, et la confirmation que la connexion de signalisation a été établie avec succès.

7. Procédé de contrôle d'accès selon la revendication 1, dans lequel l'AP est une station de base locale, BS, ou une BS de bureau.

8. Dispositif à point d'accès, AP, comprenant :
une unité de traitement de mise en attente, configurée en vue d'autoriser un équipement d'utilisateur, UE, à être mis en attente dans une cellule AP après avoir reçu une Demande d'Actualisation d'Emplacement de la part de l'UE ;
une unité de jugement, configurée en vue de juger si l'UE détient les droits requis pour utiliser l'AP quand elle reçoit une demande de service de la part de l'UE ; et
une unité de réessayage, configurée en vue de réessayer l'UE sur une autre cellule lorsqu'un résultat de jugement de l'unité de jugement est négatif ;
dans lequel l'unité de réessayage est également configurée pour émettre une demande de reconfiguration de porteuse radioélectrique, RB, vers l'UE, dans lequel la demande de reconfiguration RB porte une information de fréquence et de brouillage d'une cellule cible ; et
une fois que l'UE a réessayé d'atteindre la cellule cible selon l'information de fréquence et de brouillage de la cellule cible portée dans la demande de reconfiguration RB, la réception d'un message de reconfiguration complète RB transmis à partir de l'UE.

9. Dispositif AP selon la revendication 8, comprenant également une unité de liste d'admission, configurée en vue de sauvegarder les identités des UE qui détiennent les droits requis pour utiliser l'AP, dans lequel :
l'unité de jugement comprend :
une sous-unité d'extraction d'identité, configurée en vue d'extraire l'identité de l'UE à partir de la demande de service de l'UE ;
une sous-unité de comparaison, configurée en vue de comparer l'identité de l'UE extraite par la sous-unité d'extraction d'identité à chaque identité d'UE sauvegardée sur l'unité de liste d'admission ; et
une sous-unité de jugement, configurée en vue de juger si l'UE détient les droits requis pour utiliser l'AP selon un résultat de comparaison de la sous-unité de comparaison.

10. Dispositif AP selon la revendication 8 ou la revendication 9, dans lequel l'unité de traitement de mise en attente permet à l'UE d'être mis en attente dans la cellule AP après avoir reçu la Demande d'Actualisation d'Emplacement de la part de l'UE de la manière suivante :
réception d'une Demande de Connexion de Contrôle des Ressources Radio, RRC, qui porte une valeur de cause de mise en attente de la part de l'UE ;
émission d'un message de Configuration de Connexion RRC vers l'UE, et réception d'un message de Configuration de Connexion Complète RRC de la part de l'UE ;
réception d'un message de Transfert Direct Initial qui porte la Demande d'Actualisation d'Emplacement de la part de l'UE, et émission d'une Demande de Connexion d'une Partie de Contrôle de Connexion de Signalisation, SCCP, vers un réseau central, CN, par le biais d'une passerelle d'accès, AG ; et
réception d'un message de Confirmation de Connexion que le CN émet par le biais de l'AG, et confirmation que la connexion de signalisation a été établie avec succès.

11. Dispositif AP selon l'une quelconque des revendications 9 à 11, dans lequel la demande de service est une demande de service de partie appelante, et l'unité de jugement juge si l'UE détient les droits requis pour utiliser l'AP de la manière suivante :
obtention d'une identité de l'UE selon la demande de service de la partie appelante de l'UE ;
comparaison de l'identité de l'UE à chaque identité d'UE sur une liste d'admission qui est établie à l'avance dans l'AP ; et
si l'identité de l'UE ne figure pas sur la liste d'admission, détermination de ce que l'UE ne détient pas les droits requis pour utiliser l'AP.

12. Dispositif AP selon l'une quelconque des revendications 8 à 10, dans lequel la demande de service est une demande de service de partie appelée, et l'unité de jugement juge si l'UE détient les droits requis pour utiliser l'AP de la manière suivante :
obtention d'une identité de l'UE selon la demande de service de la partie appelée de l'UE ;
comparaison de l'identité de l'UE à chaque identité d'UE figurant sur la liste d'admission qui est établie à l'avance dans l'AP ; et
si l'identité de l'UE ne figure pas sur la liste d'admission, détermination de ce que l'UE ne détient pas les droits requis pour utiliser l'AP.

13. Dispositif AP selon l'une quelconque des revendications 8 à 12, dans lequel l'unité de réessayage réessaie l'UE vers une autre cellule de la manière suivante :
émission d'une Demande de Reconfiguration d'une porteuse radioélectrique, RB, vers l'UE, et réessayage de l'UE vers une autre cellule.

14. Système de contrôle d'accès, comprenant le dispositif AP selon l'une quelconque des revendications 8 à 13.
